# EUROPEAN PATENT APPLICATION

(11) **EP 3 993 474 A1**
(43) Date of publication of application: **04.05.2022**
(21) Application number: 19935435.8
(22) Date of filing: 28.06.2019
(51) Int. Cl.: H04W 16/14, H04W 72/08, H04W 28/04

(54) **BASE STATION, TERMINAL, AND CONTENTION WINDOW SIZE DETERMINATION METHOD**

(71) Applicant: NTT DOCOMO, INC., Chiyoda-Ku Tokyo 100-6150 (JP)
(72) Inventor: MURAYAMA, Daisuke, Tokyo 100-6150 (JP); HARADA, Hiroki, Tokyo 100-6150 (JP); KURITA, Daisuke, Tokyo 100-6150 (JP)
(74) Representative: Hoffmann Eitle
(86) International application number: PCT/JP2019/025980
(87) International publication number: WO 2020/261578

(57) **Abstract**

A base station includes a transmitting unit that repeats a process of decreasing a randomly determined counter value within a contention window size on the basis of channel sensing and transmits a signal after the counter value becomes 0, a receiving unit that receives HARQ feedbacks corresponding to a plurality of slots from a terminal that has received the signal, and a control unit that decides the contention window size on the basis of the HARQ feedbacks corresponding to the plurality of slots.

## Description

### TECHNICAL FIELD

The present invention relates to a base station in a wireless communication system.

### BACKGROUND ART

In a Universal Mobile Telecommunications System (UMTS) network, Long Term Evolution (LTE) has been specified for the purpose of, a higher speed data rate, a lower delay, and the like. Also, LTE-Advanced (3GPP Rel. 10-14) has been specified for the purpose of a higher capacity, sophistication, and the like of LTE (Third Generation Partnership Project (3GPP) Releases (Rel.) 8 and 9) .

Successor systems of LTE (for example, a 5th generation mobile communication system (5G), 5G plus (+), New Radio (NR), and 3GPP Rel. 15 or later) are also under review.

In the existing LTE system (for example, Rel. 8-12), it has been specified under the assumption that an exclusive operation is performed in a frequency band licensed by a telecommunication carrier (operator) (which is also referred to as a licensed band, a licensed carrier (licensed carrier), or a licensed component carrier (licensed CC)). For example, 800 MHz, 1.7 GHz, 2 GHz, and the like are used as the licensed CC.

Also, in the existing LTE system (for example, Rel. 13), a frequency band different from the licensed band (which is also referred to as an unlicensed band, an unlicensed carrier, or an unlicensed CC) is supported to extend the frequency band. For example, a 2.4 GHz band, a 5 GHz band, or the like at which Wi-Fi (registered trademark) or Bluetooth (registered trademark) can be used is assumed as the unlicensed band.

Specifically, carrier aggregation (CA) in which the carrier (CC) of the licensed band and the carrier (CC) of the unlicensed band are integrated is supported in Rel. 13. Communication performed using the licensed band together with the licensed band is referred to as a License-Assisted Access (LAA).

### CITATION LIST

### NON-PATENT DOCUMENT

Non-Patent Document 1: 3GPP TS 37.213 V15.2.0 (2019-03)

### SUMMARY OF THE INVENTION

### PROBLEM TO BE SOLVED BY THE INVENTION

In a wireless communication system in which communication is performed using the unlicensed band together with the licensed band, a base station performs channel sensing (carrier sense) in downlink in order to check the presence or absence of transmission of other devices (for example, a base station, a user terminal, a Wi-Fi device, or the like) before transmission of data in the unlicensed band.

In a case in which the channel is idle, the base station sequentially decreases a randomly determined counter value within a contention window size (CWS) and performs transmission to the user terminal after the counter value becomes 0. After the data transmission, for example, the base station updates the contention window size on the basis of a HARQ feedback received from the user terminal for data transmission in an immediately previous subframe.

For example, in NR-U, it is expected that the HARQ feedbacks corresponding to a plurality of slots are collectively transmitted from the user terminal in the future. However, a method of updating the contention window size in a case in which the HARQ feedbacks corresponding to a plurality of slots are collectively transmitted has not been proposed.

The present invention was made in light of the foregoing, and it is an object of the present invention to provide a technique of enabling the base station to appropriately determine the contention window size in a case in which the HARQ feedbacks corresponding to a plurality of slots are collectively transmitted from the user terminal.

### MEANS FOR SOLVING PROBLEM

According to the technology of the disclosure, a base station including a transmitting unit that repeats a process of decreasing a randomly determined counter value within a contention window size on the basis of channel sensing and transmits a signal after the counter value becomes 0, a receiving unit that receives HARQ feedbacks corresponding to a plurality of slots from a terminal that has received the signal, and a control unit that decides the contention window size on the basis of the HARQ feedbacks corresponding to the plurality of slots is provided.

### EFFECT OF THE INVENTION

According to the technology of the disclosure, a technique of enabling the base station to appropriately determine the contention window size in a case in which the HARQ feedbacks corresponding to a plurality of slots are collectively transmitted from the user terminal is provided.

### BRIEF DESCRIPTION OF DRAWINGS

Fig. 1 is a diagram illustrating an example of CSMA/CA with ACK;
Fig. 2 is a diagram illustrating an example of contention of data by a hidden terminal;
Fig. 3 is a diagram illustrating an example of CSMA/CA with RTS/CTS;
Fig. 4 is a diagram illustrating an example of RTS/CTS in a NR-U system;
Fig. 5 is a diagram illustrating an example of a selectable CWS;
Fig. 6 is a diagram illustrating an example of an aggregated HARQ FB;
Fig. 7 is a diagram illustrating an example of a schematic configuration of a wireless communication system according to an embodiment;
Fig. 8 is a flowchart for describing a method 1a;
Fig. 9 is a diagram for describing a method 1a;
Fig. 10 is a flowchart for describing a method 2a;
Fig. 11 is a diagram for describing a method 2a;
Fig. 12 is a flowchart for describing a method 1b;
Fig. 13 is a flowchart for describing a method 2b;
Fig. 14 is a diagram illustrating an example of a configuration of a base station according to an embodiment;
Fig. 15 is a diagram illustrating an example of a configuration of a user terminal according to an embodiment; and
Fig. 16 is a diagram illustrating an example of a hardware configuration of a base station and a user terminal according to an embodiment.

### MODE(S) FOR CARRYING OUT THE INVENTION

In describing an exemplary embodiment of the present invention, an example of a contention avoidance method in the unlicensed band will be described first.

### (Contention avoidance method in unlicensed band)

In the unlicensed band (for example, 2.4 GHz band or 5 GHz band), since it is assumed that a plurality of systems such as a Wi-Fi (registered trademark) system and a system supporting the LAA (LAA system) coexist, transmission contention avoidance or interference control between a plurality of systems is necessary.

An NR system using the unlicensed band (which is also referred to as, for example, 5G, 5G+, NR, or 3GPP Rel. 15 or later) is also called an NR-Unlicensed (U) system, an NR LAA system, or the like. Dual connectivity (DC) between the licensed band and the unlicensed band, stand-alone (SA) of the unlicensed band, or the like is also likely to be employed in NR-U.

For example, in a Wi-Fi (registered trademark) system using the unlicensed band, Carrier Sense Multiple Access (CSMA)/Collision Avoidance (CA) is employed for the purpose of contention avoidance and the like.

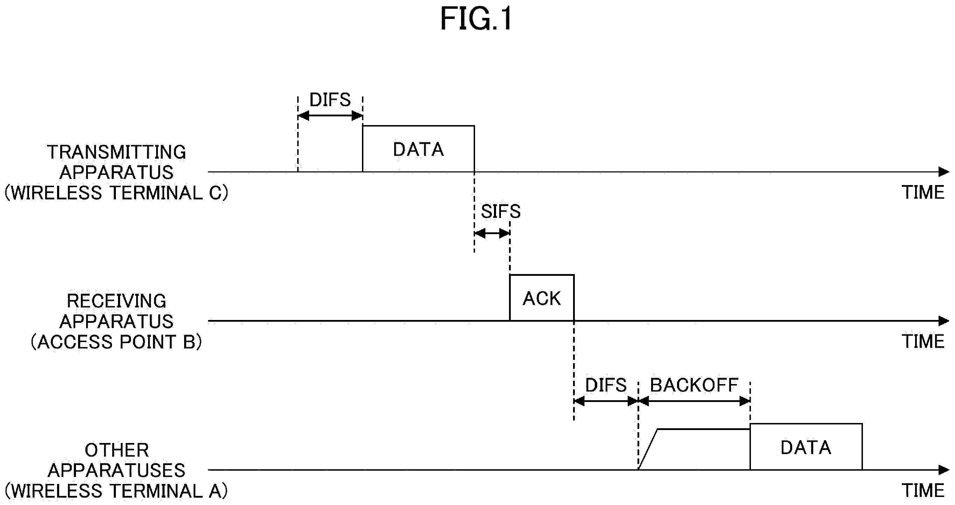

Fig. 1 is a diagram illustrating an example of CSMA/CA. As illustrated in Fig. 1, a wireless terminal C (a data transmitting side) checks a signal on a communication medium (carrier sense) and does not immediately start data transmission even in a case in which it is determined that there is no signal and transmits data after waiting for a predetermined period of time. This waiting time is referred to as a Distributed Access Inter Frame Space (DIFS). An access point B (a data receiving side) receiving data returns an acknowledgment (ACK). ACK can be transmitted simply by waiting for a shorter period of time (ShortIFS (SIFS)) than the DIFS since ACK can be transmitted with a priority. A wireless terminal C (a data transmitting side) repeats retransmission until ACK is received. For this reason, an access scheme (a first access scheme) illustrated in Fig. 1 is also referred to as CSMA/CA with ACK.

In the Wi-Fi (registered trademark) system, RTS/CTS in which a transmission request (Request to Send (RTS)) is transmitted before transmission, and a response indicating receivable (Clear to Send (CTS)) is transmitted if the receiving device is in a receivable state is employed for the purpose of contention avoidance or the like. For example, RTS/CTS is effective for data contention avoidance by a hidden terminal. In a case in which a signal from a certain node does not reach the transmitting device but reaches the receiving device, the node is called a hidden terminal (a hidden node) to the transmitting device. The hidden terminal is also called a non-detected node, a non-sensed node, or the like. Data contention by the hidden terminal is also called a hidden terminal problem.

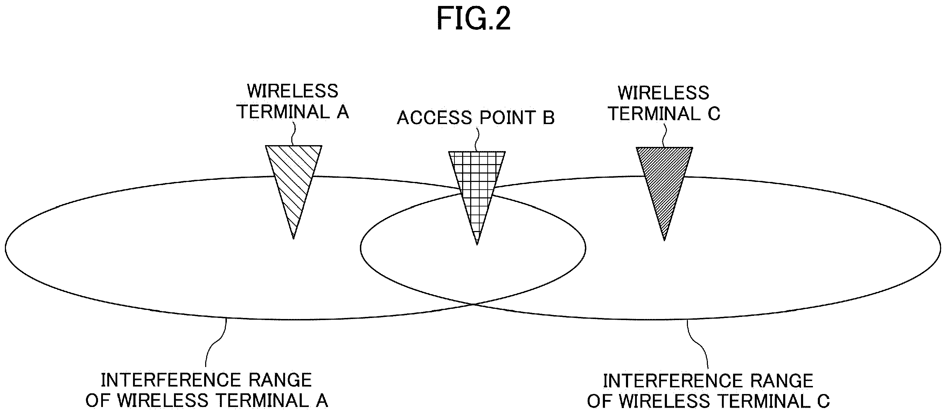

Fig. 2 is a diagram illustrating an example of the data contention by the hidden terminal. In Fig. 2, since a radio wave of a wireless terminal C does not reach a wireless terminal A, the wireless terminal A is unable to detect a transmission signal from the wireless terminal C even when the carrier sense is performed before transmission. As a result, even when the wireless terminal C is transmitting to an access point B, the wireless terminal A may perform transmission to the access point B. In this case, the transmission signals from the wireless terminals A and C are in contention at the access point B, and the throughput is likely to be reduced.

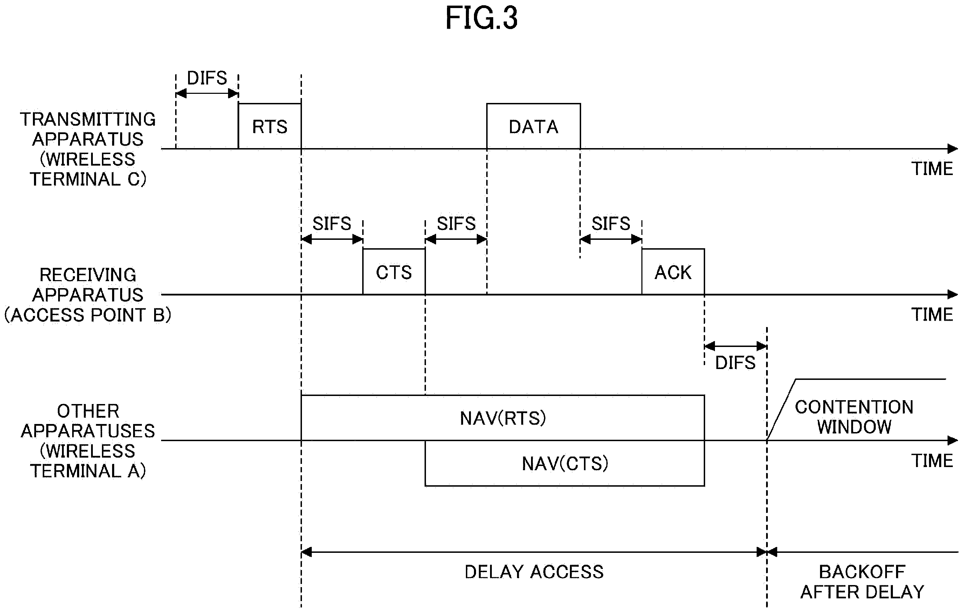

Fig. 3 is a diagram illustrating an example of CSMA/CA with RTS/CTS (CSMA/CA with RTS/CTS) in the configuration of Fig. 2. As illustrated in Fig. 3, the wireless terminal C (the transmitting side) transmits the RTS if it is confirmed that there is no other transmission signal (idle) in a predetermined period of time (DIFS) before transmission by the carrier sense (in Fig. 2, the RTS does not reach the wireless terminal A (other terminals)). The RTS is preferably omni-directional transmission. The RTS may be subject to beam forming. If the access point B (the receiving side) receives the RTS from the wireless terminal C and transmits the CTS if it is confirmed that there is no other transmission signal (idle or clear) in a predetermined period of time (Short Inter Frame Space (SIFS)) by the carrier sense. The CTS is preferably omni-directional transmission. The RTS is also called a transmission request signal. The CTS is also called a receivable signal.

In Fig. 2, since the CTS from the access point B reaches the wireless terminal A (other devices), the wireless terminal A senses that communication is being performed and delays transmission. Since the RTS/CTS packet contains a predetermined period (which is also referred to as a Network Allocation Vector (NAV), a transmission prohibition period, or the like), the predetermined period (NAV "NAV (CTS)" indicated in NAV "NAV (RTS)" CTS indicated in the RTS).

The wireless terminal C that has received the CTS from the access point B transmits data (frame) if it is confirmed that there is no other transmission signal (idle) in a predetermined period (SIFS) before transmission by the carrier sense. The access point B that has received the data transmits ACK after the determined period (SIFS).

In Fig. 3, if the wireless terminal A which is the hidden terminal of the wireless terminal C detects the CTS from the access point B, the transmission is delayed, and thus the contention of the transmission signals of the wireless terminal A and C in the access point B can be avoided.

In the LAA of the existing LTE system (for example, Rel. 13), a data transmitting device performing listening (which is also referred to as a Listen Before Talk (LBT), a CCA, a carrier sense, a channel access operation, or the like) of checking the presence or absence of transmission by other devices (for example, a base station, a user terminal, a Wi-Fi (registered trademark) device, or the like).

The transmitting device may be, for example, a base station (for example, a gNodeB (gNB), a transmission/reception point (TRP), or a network (NW)) in downlink (DL) and may be a user terminal (for example, a user equipment (UE)) in uplink (UL). Further, the receiving device that receives data from the transmitting device may be, for example, a user terminal in DL and may be a base station in UL.

In the LAA of the existing LTE system, the transmitting device starts data transmission after a predetermined period (for example, immediately after or during the backoff period) after it is detected that any other device is not transmitting (the idle state) in listening and does not perform data transmission if it is detected that another device is transmitting (the busy state). However, even in a case in which the transmitting device transmits data on the basis of the result of the listening, it is unlikely that the data contention in the receiving device is unable to be avoided as a result of the presence of the hidden terminal.

For this reason, in an NR-U system, supporting the RTS/CTS is under review in order to improve the data contention avoidance rate in the receiving device.

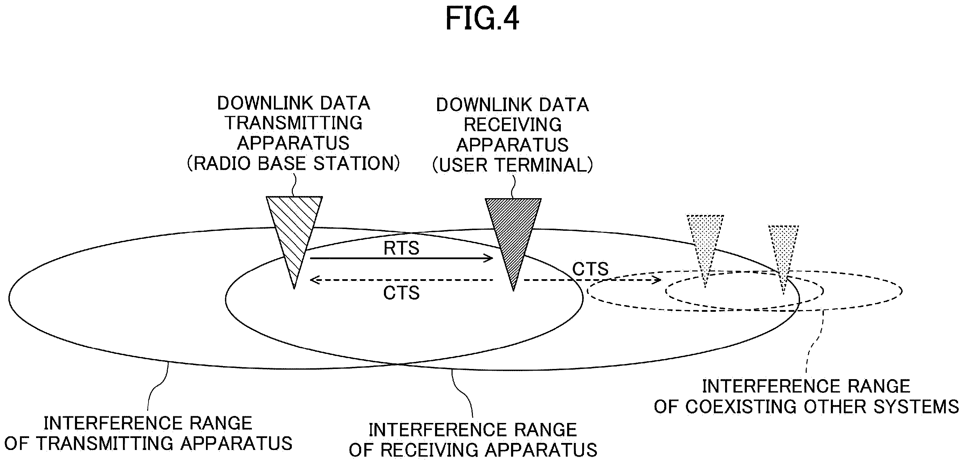

Fig. 4 is a diagram illustrating an example of RTS/CTS in the NR-U system. In the NR-U system that supports the RTS/CTS, it is assumed that the transmitting device (the base station) transmits the RTS with the carrier of the unlicensed band (the unlicensed carrier, the unlicensed CC, the LAA SCell (Secondary Cell), or the like) before transmitting the downlink data to the receiving device (the user terminal).

In a case in which the uplink unlicensed CC is supported in the NR-U system, it is considered that the receiving device (the user terminal) of the downlink data transmits the CTS using the uplink unlicensed CC as illustrated in Fig. 4. Instead of the uplink unlicensed CC, the unlicensed CC of Time Division Duplex (TDD, unpaired spectrum) may be used.

The node in the NR-U (for example, the base station (for example, the gNB) or the UE) acquires a transmission opportunity (TxOP or channel occupancy) in a case in which the LBT result is idle, and does not perform transmission in a case in which the LBT result is busy (LBT-busy). A time of the transmission opportunity time is called a channel occupancy time (COT).

The COT is a total time length of all transmissions within the transmission opportunity and a gap within a predetermined period of time and may be a maximum COT (MCOT) or less. The MCOT may be decided on the basis of a channel access priority class. The channel access priority class may be associated with a contention window size.

The base station that has acquired the MCOT by the LBT may perform scheduling for one or more user terminals during the MCOT.

The NR-U system may perform a carrier aggregation (CA) operation using the unlicensed CC and the licensed CC, may perform a dual connectivity (DC) operation using the unlicensed CC and the licensed CC, and may perform a stand-alone (SA) operation using only the unlicensed CC. The CA, the DC, or the SA may be performed by a system of any one of NR and LTE. The DC may be performed by at least two of NR, LTE, and other systems.

UL transmission in the unlicensed CC may be at least one of PUSCH, PUCCH, and SRS.

The node may perform LBT in the LTE LAA or receiver assisted LBT as LBT (initial LBT or initial-LBT (I-LBT)) for acquiring the COT. In this case, the LBT of the LTE LAA may be a category 4.

The user terminal may assume the presence of a signal (for example, a reference signal (RS) such as a demodulation reference signal (DMRS)) in a PDCCH or a group common (CG)-PDCCH for detecting a transmission burst from the serving base station. The PDCCH may be a PDCCH for one UE (a UE-specific PDCCH or a regular PDCCH). The GC-PDCCH may be a PDCCH common to one or more UEs (a UE group common PDCCH).

The base station may transmit a specific PDCCH (a PDCCH or a GC-PDCCH) including a specific DMRS for notifying of the start of the COT at the time of the start of the COT triggered by the base station. At least one of a specific PDCCH and a specific DMRS is also referred to as a COT start notification signal. The base station transmits, for example, the COT start notification signal to one or more specific UEs, and the UE recognizes the COT in a case in which a specific DMRS is detected.

The base station may schedule UL transmission in the COT of the UE with a specific PDCCH. The UE that has scheduled the UL transmission in the COT is referred to as a specific UE. The specific UE may be a UE that has been scheduled transmission of a UL signal in the COT (for example, a first UL signal in the COT).

In NR-U, a handshake procedure between a transmitting device and a receiving device is under review. It is under review that a UE designated by a specific PDCCH realizes the handshake procedure between the base station and the UE by transmitting a specific UL signal (a response signal) such as an SRS after the LBT.

As described above, in NR-U, the specific PDCCH (the COT start notification signal) is used similarly to the transmission request signal (RTS), and the response signal triggered by the specific PDCCH is used similarly to the receivable state notification signal (CTS), and an access schemes close to CSMA/CA with RTS/CTS (an access scheme or a second access scheme using the receiver assisted access, the receiver assisted access (RAA), the handshake procedure, and the RTS/CTS) is under review.

### (Problems)

An example of a mechanism of the existing LBT in the base station that performs the LAA will be described in further detail. The base station randomly generates a backoff counter value within the range of the contention window size (CWS) after the previous transmission. The base station waits until it is confirmed that the channel (for example, a channel of a frequency of an unlicensed band) is idle for an initial delay time, and performs the carrier sense for each sensing slot time.

If the channel is idle as a result of the carrier sense, the backoff counter value is decreased. In a case in which the channel is busy, the backoff counter value is maintained, and the carrier sense is performed after waiting until it is confirmed that the channel is idle for the initial delay time.

As a result of repeating the above operation, the base station can obtain an authority to access the channel at a timing at which the backoff counter value becomes zero and start transmitting a signal in the channel. The transmission of the signal may be data transmission by the PDSCH, may be control information transmission by the PDCCH, or may be transmission of control information or data by the EPDCCH.

After the transmission is completed, the base station updates the CWS on the basis of the occurrence state of communication errors for the most recent transmission burst. Specifically, for example, in a case in which a method of a related art described in Non-Patent Document 1 is used, the base station updates the CWS to one which is longer by one step in a case in which the NACK ratio of the HARQ FB (feedback) corresponding to the PDSCH transmission in the most recent transmission subframe in the carrier is 80% or more.

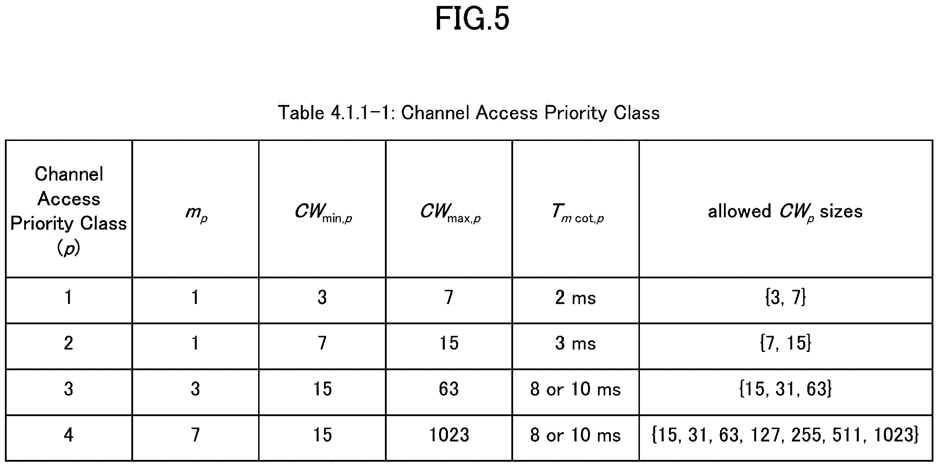

Fig. 5 (Table 4.1.1-1: Channel Access Priority Class in Non-Patent Document 1) illustrates an example of selectable CWSs.

Fig. 5 illustrates the MCOT (maximum channel occupation time), the selectable CWS, and the like for each channel access priority class. For example, in a case in which the base station desires to transmit small-sized data with a low delay, it is possible to shorten the LBT time instead of shortening the COT by using the channel access priority class = 1.

As described above, in NR-U, it is possible to switch between DL and UL within the COT. However, since the LBT is necessary at the time of switching, if the switching is frequently performed, a possibility of transmission opportunity loss is high. Further, it is necessary to set a time to stop transmission for the LBT, and a switching overhead is large. Therefore, in NR-U, the number of DL/UL switchings within one COT (transmission opportunity) is likely to be limited.

For the above reasons, an extended method of allowing the standby time from data reception by the PDSCH to transmission of the HARQ FB to be longer than a specified time and causing the HARQ FBs within the COT to be collectively transmitted at the end of the COT. Here, the collectively transmitted HARQ FBs are referred to as an aggregated HARQ FB. It is assumed that the aggregated HARQ FB includes the HARQ FBs corresponding to a plurality of slots.

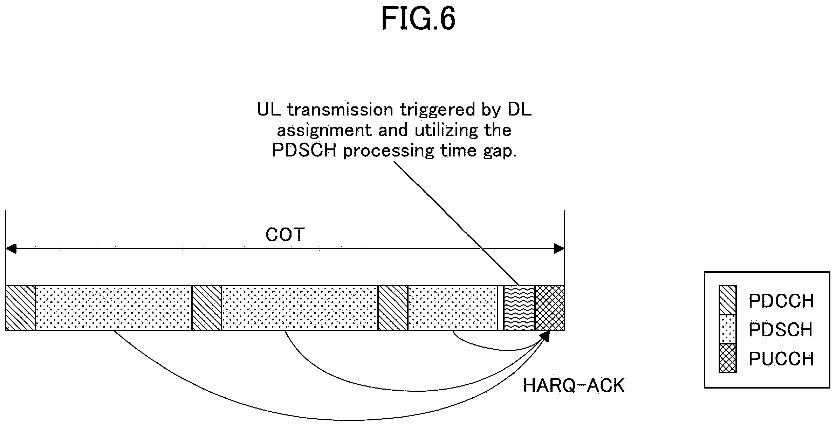

Fig. 6 (excerpt from R1-1906644) illustrates an example in which the user terminal transmits the aggregated HARQ FB. In the example of Fig. 6, three slots are illustrated, and the user terminal transmits the aggregated HARQ FB including the respective HARQ FBs for the data received in the respective three slots at the end of the COT.

As described above, it is disclosed in Non-Patent Document 1 that the CWS is updated on the basis of HARQ-FB corresponding to the most recent transmission subframe in which HARQ-FB reception is expected. However, no proposal on how to update the CWS in a case in which the HARQ FBs corresponding to a plurality of slots are returned from the user terminal has been made until now.

Hereinafter, an example of the method of updating the CWS in a case in which the HARQ FBs corresponding to a plurality of slots are returned from the user terminal will be described in detail as an embodiment of the present invention.

### (Embodiment of the present invention)

Hereinafter, an embodiment according to the present disclosure will be described in detail with reference to the appended drawings. A plurality of methods to be described in the present embodiment may be implemented independently or may be applied in combination.

In the present disclosure, frequency, band, frequency band, spectrum, carrier, component (CC), cell, channel, subband, LBT subband, active bandwidth part (BWP), and part of an active BWP may be interchangeably interpreted.

In the present disclosure, listening, Listen Before Talk (LBT), Clear Channel Assessment (CCA), carrier sense, sensing, channel sensing, or channel access procedure may be interchangeably interpreted.

In the present disclosure, NR-U frequency, NR-U target frequency, NR-U band, shared spectrum, unlicensed band, unlicensed spectrum, LAA SCell, LAA cell, primary cell (PCell, primary secondary cell (PSCell), special cell (SpCell)), secondary cell (SCell), and frequency band to which channel sensing is applied may be interchangeably interpreted.

In the present disclosure, NR frequency, NR target frequency, licensed band, licensed spectrum, PCell, PSCell, SpCell, SCell, non-NR-U frequency, and frequency band to which Rel. 15, NR, and channel sensing are not applied may be interchangeably interpreted.

Different frame structures may be used in an NR-U target frequency and an NR target frequency.

A wireless communication system (NR-U or an LAA system) may conform to a first wireless communication standard (for example, NR, LTE, or the like) (support the first wireless communication standard).

Other systems coexisting with the wireless communication system (an coexisting system or an coexisting device) and other wireless communication devices (coexisting devices) may conform to a second wireless communication standard different from the first wireless communication standard (support the second wireless communication standard) such as LTE, Wi-Fi (registered trademark), Bluetooth (registered trademark), WiGig (registered trademark), a wireless Local Area Network (LAN), IEEE 802.11, Low Power Wide Area (LPWA), or the like. The coexistence system may be a system that receives interference from the wireless communication system or a system that causes interference to the wireless communication system.

In the present disclosure, UE (the user terminal) transmission, UL transmission, a UL signal, a physical uplink shared channel (PUSCH), a physical uplink control channel (PUCCH), a sounding reference signal (SRS), an uplink (UL)-reference signal ( RS), a preamble, a random access channel (RACH), and a physical random access channel (PRACH) may be interchangeably interpreted.

In the present disclosure, base station transmission, DL transmission, a DL signal, a physical downlink shared channel (PDSCH), a physical downlink control channel (PDCCH), a downlink (DL)-reference signal (RS), a demodulation reference signal (DMRS) for a PDCCH, and a DMSCH for a PDSCH may be interchangeably interpreted.

In the present disclosure, a node, a UE, a base station, a transmission/reception point (TRP), a wireless communication device, and a device may be interchangeably interpreted.

Also, the NR-U of the present disclosure is not limited to LAA and may include cases in which the unlicensed band is used in a stand-alone manner.

### <Wireless communication system>

A configuration of the wireless communication system according to an embodiment of the present disclosure will be described below. In the wireless communication system, communication is performed using any of the methods described according to an embodiment of the present disclosure or a combination thereof. Further, in the wireless communication system, at least the operation of the NR-U system described above can be executed.

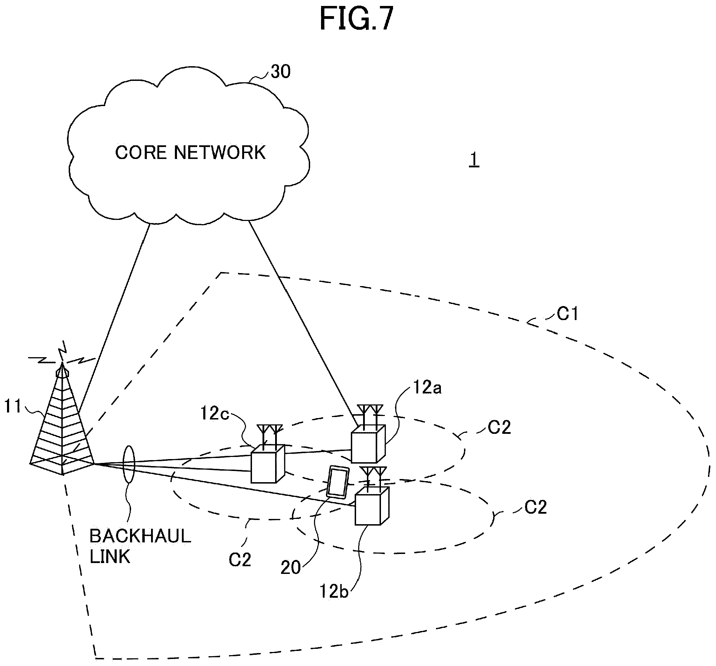

Fig. 7 is a diagram illustrating an example of a schematic configuration of a wireless communication system according to an embodiment. A wireless communication system 1 may be a system that realizes communication using Long Term Evolution (LTE), a 5th generation mobile communication system New Radio (5G NR), or the like specified by the Third Generation Partnership Project (3GPP).

The wireless communication system 1 may support dual connectivity (Multi-RAT Dual Connectivity (MR-DC)) between a plurality of Radio Access Technologies (RATs).

MR-DC may include dual connectivity (E-UTRA-NR Dual Connectivity (EN-DC)) between LTE (Evolved Universal Terrestrial Radio Access (E-UTRA)) and NR and dual connectivity (NR-E-UTRA Dual Connectivity (NE-DC)) between NR and LTE.

In EN-DC, a base station (eNB) of LTE (E-UTRA) is a master node (MN), and a base station (gNB) of NR is a secondary node (SN). In NE-DC, a base station (gNB) of NR is the MN and a base station (eNB) of LTE (E-UTRA) is a SN.

The wireless communication system 1 may support the dual connectivity between a plurality of base stations in the same RAT (for example, dual connectivity (NR-NR Dual Connectivity (NN-DC)) in which both the MN and the SN are base stations (gNB) of NR).

The wireless communication system 1 includes a base station 11 that forms a microcell C1 having a relatively large coverage and base stations 12 (12a to 12c) which are arranged in the microcell C1 and form a small cell C2 smaller than the microcell C1. A user terminal 20 may be located in at least one cell. The arrangement of each cell and the user terminal 20 and the numbers thereof are not limited to the embodiment illustrated in Fig. 6. Hereinafter, the base stations 11 and 12 are collectively referred to as a base station 10 in a case in which they need not be distinguished. The CWS update operation according to the present invention may be performed by any base station.

The user terminal 20 may be connected to at least one of a plurality of base stations 10. The user terminal 20 may use at least one of the carrier aggregation (CA) and dual connectivity (DC) using a plurality of components (CCs).

Each CC may be included in at least one of a first frequency range (a frequency range 1 (FR1)) and a second frequency range (a frequency range 2 (FR2)). The microcell C1 may be included in the FR 1, and the small cell C2 may be included in the FR 2. For example, the FR 1 may be a frequency range of 6 GHz or less (sub 6 GHz (sub-6 GHz)), and the FR 2 may be a frequency range higher than 24 GHz (above-24 GHz). The frequency ranges, the definitions, and the like of the FR 1 and the FR 2 are not limited to these, and for example, the FR 1 may correspond to a higher frequency range than the FR 2.

Further, the user terminal 20 may perform communication using at least one of time division duplex (TDD) and frequency division duplex (FDD) in each CC.

A plurality of base stations 10 may be connected in a wired manner (for example, an optical fiber compliant with the Common Public Radio Interface (CPRI), an X2 interface, or the like) or a wireless manner (for example, NR communication). For example, in a case in which NR communication is used as a backhaul between the base stations 11 and 12, the base station 11 corresponding to a higher layer station may be called an integrated access backhaul (IAB) driver, and the base station 12 corresponding to a relay station (relay) may be called an IAB node.

The base station 10 may be connected to a core network 30 via another base station 10 or directly. The core network 30 may include, for example, at least one of an Evolved Packet Core (EPC), a 5G Core Network (5GCN), a Next Generation Core (NGC), and the like.

The user terminal 20 may be a terminal corresponding to at least one of communication schemes such as LTE, LTE-A, and 5G.

In the wireless communication system 1, an orthogonal frequency division multiplexing (OFDM)-based wireless access scheme may be used. For example, in at least one of downlink (DL) and uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), or the like may be used.

A wireless access scheme is also called a waveform. In the wireless communication system 1, other wireless access schemes (for example, other single carrier transmission schemes or other multi-carrier wireless transmission schemes) may be used as UL and DL wireless access schemes.

In the wireless communication system 1, a downlink shared channel (a physical downlink shared channel (PDSCH)) shared by each user terminal 20, a broadcast channel (a physical broadcast channel (PBCH)), a downlink control channel (a physical downlink control channel (PDCCH)), or the like may be used as a downlink channel.

In the wireless communication system 1, an uplink shared channel (a physical uplink shared channel (PUSCH)) shared by each user terminal 20, an uplink control channel (a physical uplink control channel (PUCCH)), a random access channel (a physical random access channel (PRACH)), or the like may be used as an uplink channel.

User data, higher layer control information, system information block (SIB), or the like are transmitted through a PDSCH. The user data, the higher layer control information, or the like may be transmitted through a PUSCH. Also, a master information block (MIB) may be transmitted through a PBCH.

Lower layer control information may be transmitted through a PDCCH. The lower layer control information may include, for example, downlink control information (DCI) including scheduling information of at least one of a PDSCH and a PUSCH.

The DCI for scheduling the PDSCH is also called a DL assignment, a DL DCI, or the like and the DCI for scheduling the PUSCH is also called an UL grant, a UL DCI, or the like. Further, the PDSCH may be interpreted interchangeably with DL data, and the PUSCH may be interpreted interchangeably with UL data.

A COntrol REsource SET (CORESET) and a search space may be used for PDCCH detection. The CORESET corresponds to resources for searching the DCI. The search space corresponds to a search area and a search method of PDCCH candidates. One CORESET may be associated with one or more search spaces. The user terminal 20 may monitor a CORESET related to a certain search space on the basis of a search space setting.

One search space may correspond to a PDCCH candidate corresponding to one or more aggregation levels. One or more search spaces are also called a search space set. Further, a "search space," a "search space set," a "search space configuration," a "search space set configuration," a "CORESET," a "CORESET configuration," and the like in the present disclosure may be interpreted interchangeably.

Uplink control information (UCI) including at least one of channel state information (CSI), acknowledgment information (which is also called, for example, Hybrid Automatic Repeat reQuest ACKnowledgement (HARQ-ACK), ACK/NACK, or the like), and a scheduling request (SR) may be transmitted through a PUCCH. A random access preamble to establish a connection with a cell may be transmitted through a PRACH.

In the present disclosure, downlink, uplink, or the like may be expressed without adding "link." Also, it may be expressed without adding "physical" to the beginning of various kinds of channels.

In the wireless communication system 1, a synchronization signal (SS), a downlink reference signal (DL-RS), and the like may be transmitted from the base station 10. In the wireless communication system 1, a cell-specific reference signal (CRS), a channel state information reference signal (CSI-RS), a DeModulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (the PSS or the SSS) and the PBCH (and the DMRS for the PBCH) is also called an SS/PBCH block, an SS Block (SSB), or the like. Further, the SS, the SSB, or the like is also called a reference signal.

In the wireless communication system 1, a sounding reference signal (SRS), a demodulation reference signal (DMRS), or the like may be transmitted from the user terminal 20 as an uplink reference signal (UL-RS). Further, the DMRS is also called a UE-specific Reference Signal.

Hereinafter, in the wireless communication system of the present disclosure, for example, the base station 10 executes the above-described downlink channel access procedure in order to transmit a signal using the carrier of the unlicensed band (which is also referred to as a channel). In other words, the base station 20 randomly generates the backoff counter value within the range of the CWS after the previous transmission. The base station 20 is on standby until it is confirmed that the channel is idle for the initial delay time, and performs the carrier sense (= channel sensing) at the interval of the sensing slot time.

If the channel is idle as a result of the carrier sense, the backoff counter value is decreased. In a case in which the channel is busy, the backoff counter value is maintained, and the carrier sense is performed after it is on standby until it is confirmed that the channel is idle for the initial delay time.

As a result of repeating the above operation, the base station can obtain an authority to access the channel at a timing at which the backoff counter value becomes zero and start transmission.

After the transmission is completed, the base station 10 performs the CWS update operation, for example, at a timing at which the LBT starts or at any timing in a period from a time point at which the last aggregated HARQ FB is received to a time point at which the LBT starts. The CWS update operation in the present disclosure will be described later in detail. Further, the timing at which "the LBT starts" may be a timing immediately before a timing at which the backoff counter value is randomly generated.

Further, as described with reference to Fig. 6, the user terminal 20 in the wireless communication system 1 of the present disclosure can collectively transmit the HARQ FBs corresponding to a plurality of slots as the aggregated HARQ FB.

### (CWS update operation)

Hereinafter, the CWS update operation executed by the base station 10 in the present disclosure will be described. The base station 10 in the present disclosure is assumed to support NR-U, but the operation to be described below is not limited to NR-U but can be applied to other systems.

The base station 10 in the present disclosure receives the HARQ FBs corresponding to a plurality of slots (the aggregated HARQ FB) from the user terminal 20 at the COT end or the like, and executes CWS update determination using the received HARQ FBs corresponding to a plurality of slots. Hereinafter, a method 1a, a method 2a, a method 2-1a, a method 1b, a method 2b, and a method 2-1b will be described as specific examples.

### <Method 1a>

In the method 1a, the base station 10 receives all HARQ FBs to be received in the aggregated HARQ FB received most recently from the start of the LBT and shortens the CWS (maintains it when it is the minimum value) or reset the CWS to a minimum value only in a case in which all of them are ACKs. In the other cases, the base station 10 extends the CWS (maintains it when it is the minimum value).

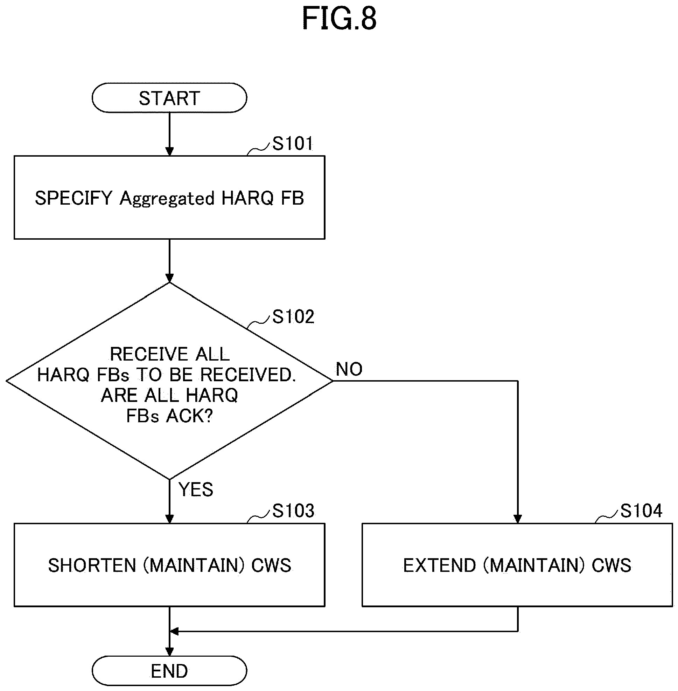

The method 1a will be described with reference to a flowchart in Fig. 8 illustrating the CWS update operation. In S (step) 101, the base station 10 specifies the most recently received aggregated HARQ FB going back from the start of the LBT. Note that, the base station 10 stores at least information of the most recently received aggregated HARQ FB (for example, a bit sequence of ACK/NACK) in a storage device such as a memory and thus can read the aggregated HARQ FB from the memory and use it in the CWS update operation.

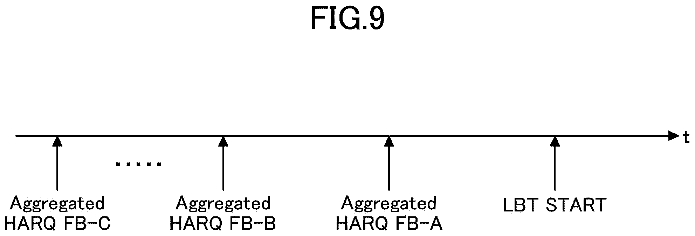

Fig. 9 illustrates an example of the aggregated HARQ FB received from the user terminal 20 by the base station 10. In the example illustrated in Fig. 9, the base station 10 receives an aggregated HARQ FB-A, an aggregated HARQ FB-B, and an aggregated HARQ FB-C. In the example illustrated in Fig. 9, in S101 of Fig. 8, the base station 10 specifies the aggregated HARQ FB-A.

In S102 of Fig. 8, the base station 10 checks content of the specified aggregated HARQ FB, receives all the HARQ FBs to be received, and determines whether or not all of them are ACKs.

The base station 10 transmits control information (DCI) to the user terminal 20 through the PDCCH in order to transmit data (which is also called a signal) through the PDSCH, and thus it is possible to detect the HARQ FB to be received corresponding to the data transmission by the PDSCH.

As an example, a case in which the base station 10 performs scheduling for transmitting 2 transport blocks (TB) per slot to the user terminal 20 over 3 slots, and transmission of aggregated HARQ FB through the PUCCH is performed at an end part of the third slot is assumed.

In this case, in S102, the base station 10 checks content of the aggregated HARQ FB and determines whether or not all six HARQ FBs are ACKs.

In a case in which the determination result of S102 is Yes, the process proceeds to S103, and the base station 10 reduces the CWS (maintains it in a case in which it is the minimum value). Alternatively, the CWS may be reset to the minimum value. As an example, the CWS illustrated in Fig. 5 is assumed to be able to be used, and the Channel Access Priority Class is 3. In this case, if the CWS immediately before the CWS update is assumed to be 63, in S103, the CWS is reduced to 31. If the CWS immediately before the CWS update is assumed to be 15, in S103, the CWS is maintained.

In a case in which the determination result of S102 is No, the process proceeds to S104, and the base station 10 extends the CWS (maintains it when in a case in which it is the maximum value). As an example, the CWS illustrated in Fig. 5 is assumed to be able to be used, and the Channel Access Priority Class is 3. In this case, if the CWS immediately before the CWS update is assumed to be 15, in S104, the CWS is extended to 31. Further, if the CWS immediately before the CWS update is assumed to be 63, in S104, the CWS is maintained.

### <Method 2a>

Next, the method 2a will be described. In the method 2a, the base station 10 receives all HARQ FBs corresponding to most recently transmitted N (N is an integer of 0 or more) TBs or code block groups (CBGs) in the aggregated HARQ FB received most recently going back from the start of the LBT and shortens the CWS (maintains it when it is the minimum value) or reset the CWS to the minimum value only in a case in which all of them are ACKs. In the other cases, the base station 10 extends the CWS (maintains it when it is the minimum value). N is a predetermined number. N may be determined in accordance with the Channel Access Priority Class. Further, transmission data for which the HARQ FB is expected to be received, such as a TB, a CBG, or the like is also called a signal.

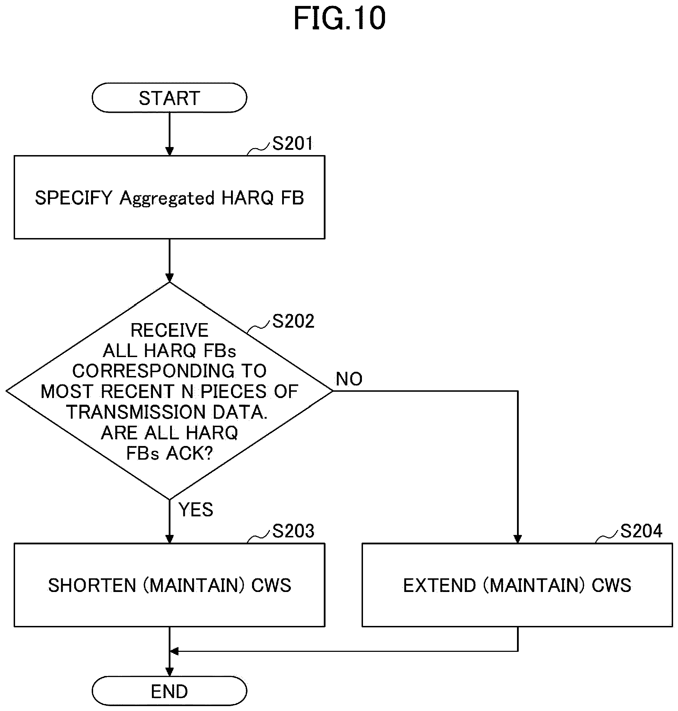

The method 2a will be described with reference to a flowchart of Fig. 10. In S201, the base station 10 specifies the most recently received aggregated HARQ FB from the start of the LBT.

In S202, the base station 10 checks content of the specified aggregated HARQ FB, receives all HARQ FBs corresponding to the most recently transmitted N TBs or N CBGs, and determines whether or not all of them are ACKs.

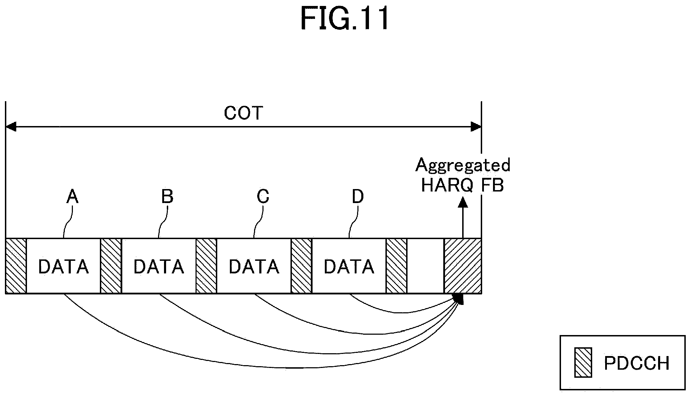

An example is illustrated in Fig. 11. Fig. 11 illustrates an example in which the base station 10 transmits transport blocks A to D (TB-A to TB-D) within the COT through the illustrated respective slots, and the aggregated HARQ FB including four ACKs/NACKs corresponding to TB-A to TB-D is returned.

In this case, if N = 3 is assumed, in S202, the base station 10 receives the HARQ FB corresponding to TB-B, the HARQ FB corresponding to TB-C, and the HARQ FB corresponding to TB-D, and determine whether or not all of them are ACKs.

In a case in which the determination result of S202 is Yes, the process proceeds to S203, and the base station 10 reduces the CWS (maintains it in a case in which it is the minimum value). Alternatively, the CWS may be reset to the minimum value.

In a case in which the determination result of S202 is No, the process proceeds to S204, and the base station 10 extends the CWS (maintains it when in a case in which it is the maximum value).

### <Method 2-1a>

Next, the method 2-1a will be described. A processing procedure of the method 2-1a is similar to the processing procedure of the method 2a. However, in the method 2-1a, the number n of all the HARQ FBs to be received in the aggregated HARQ FB specified in S201 is smaller than N. In this case, the base station 10 performs the CWS update operation using only the n HARQ FBs. The operation in the method 2-1a is similar to the operation in the method 1a accordingly.

### <Method 1b>

Next, the method 1b will be described. In the method 1b, the base station 10 shortens the CWS (maintains it when it is the minimum value) or reset the CWS to the minimum value only in a case in which the proportion (ratio) of the number of received ACKs among all HARQ FBs to be received in the aggregated HARQ FB received most recently going back from the start of the LBT is x [%] or more (x is a real number from 0 to 100). In the other cases, the base station 10 extends the CWS (maintains it when it is the minimum value). "x" is a predetermined number. "x" may be determined in accordance with the Channel Access Priority Class.

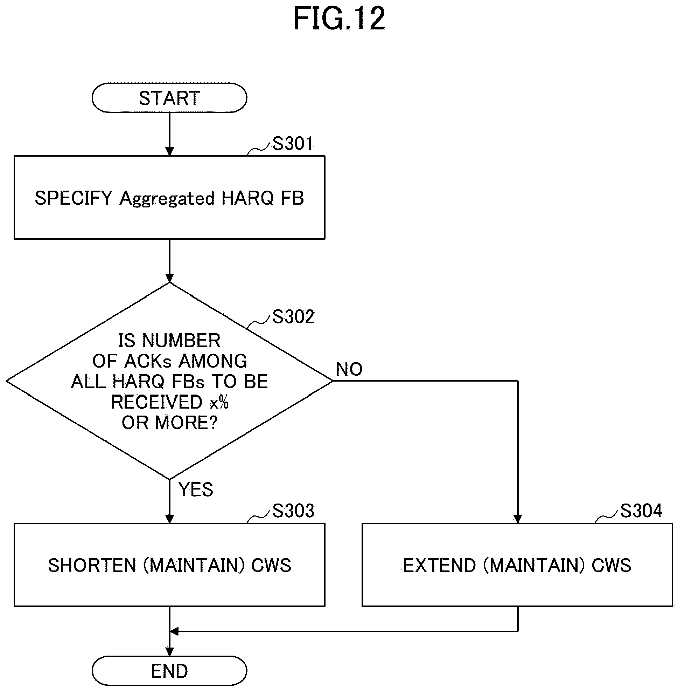

The method 1b will be described with reference to a flowchart of Fig. 12. In S301, the base station 10 specifies the most recently received aggregated HARQ FB going back from the start of the LBT.

In S302, the base station 10 checks content of the specified aggregated HARQ FB, and determines whether or not the proportion of the number of received ACKs to the number of all HARQ FBs to be received is x [%] or more.

For example, in a case in which the base station 10 is supposed to receive a total of 10 HARQ FBs by the aggregated HARQ FB specified in S301, 8 ACKs are assumed to be included in the aggregated HARQ FB. In this case, for example, in a case in which x is 80, the base station 10 determines that the proportion of the number of received ACKs to the number of all HARQ FBs to be received is x [%] or more.

In a case in which the determination result of S302 is Yes, the process proceeds to S303, and the base station 10 reduces the CWS (maintains it in a case in which it is the minimum value). Alternatively, the CWS may be reset to the minimum value.

In a case in which the determination result of S302 is No, the process proceeds to S304, and the base station 10 extends the CWS (maintains it when in a case in which it is the maximum value).

In the method 1b, the following operation may be performed.

The base station 10 extends the CWS (maintains it when it is the minimum value) only in a case in which the proportion of the number of received NACKs among all the HARQ FBs to be received in the aggregated HARQ FB received most recently going back from the start of the LBT is y [%] or more (y is a real number from 0 to 100). In the other cases, the base station 10 shortens the CWS (maintains it when it is the minimum value). "y" is a predetermined number. "y" may be determined in accordance with the Channel Access Priority Class.

### <Method 2b>

Next, the method 2b will be described. In the method 2b, the base station 10 shortens the CWS (maintains it when it is the minimum value) or reset the CWS to the minimum value only in a case in which the proportion of the number of received ACKs among all HARQ FBs to be received corresponding to the most recently received N (N is an integer of 0 or more) TBs or CBGs in the aggregated HARQ FB received most recently from the start of the LBT is x [%] or more (x is a real number from 0 to 100). In the other cases, the base station 10 extends the CWS (maintains it when it is the minimum value). Each of N and x is a predetermined number. Each of N and x may be determined in accordance with the Channel Access Priority Class.

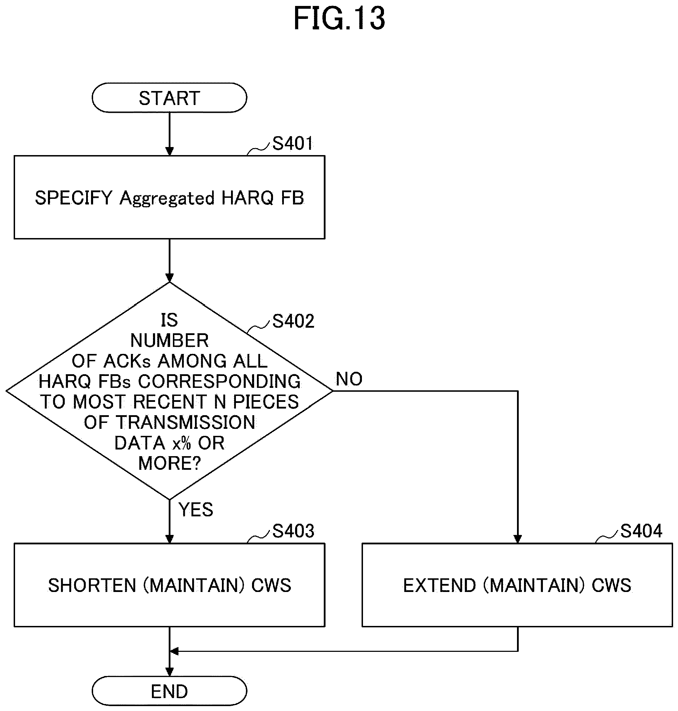

The method 2b will be described with reference to a flowchart of Fig. 13. In S401, the base station 10 specifies the aggregated HARQ FB most recently received going back from the start of the LBT.

In S402, the base station 10 checks the content of the specified aggregated HARQ FB, and determines whether or not the proportion of the number of received ACKs to the number of HARQ FBs to be received corresponding to the most recently received N TBs or N CBGs is x [%] or more.

The description will proceed using Fig. 11 described above as an example. In this case, if N = 3 is assumed, in S402, the base station 10 investigates the proportion of ACKs among the three HARQ FBs, that is, the HARQ FB corresponding to TB-B, the HARQ FB corresponding to TB-C, and the HARQ FB corresponding to TB-D. For example, if it is assumed that two of the three are ACKs and x is 80, the base station 10 determines No in S402.

In a case in which the determination result of S402 is Yes, the process proceeds to S403, and the base station 10 reduces the CWS (maintains it in a case in which it is the minimum value). Alternatively, the CWS may be reset to the minimum value.

In a case in which the determination result of S402 is No, the process proceeds to S404, and the base station 10 extends the CWS (maintains it when in a case in which it is the maximum value).

In the method 2b, the following operations may be performed.

The base station 10 extends the CWS (maintains it when it is the minimum value) only in a case in which the proportion of the number of received NACKs among the HARQ FBs to be received corresponding to the most recently transmitted N (N is an integer of 0 or more) TBs or N CBGs in the aggregated HARQ FB received most recently going back from the start of the LBT is y [%] or more (y is a real number from 0 to 100). In the other cases, the base station 10 shortens the CWS (maintains the minimum value). Each of N and y is a predetermined number. Each of N and y may be determined in accordance with the Channel Access Priority Class.

### <Method 2-1b>

Next, the method 2-1b will be described. A processing procedure of the method 2-1b is similar to the processing procedure of the method 2b. However, in the method 2-1b, the number n of all the HARQ FBs to be received in the aggregated HARQ FB specified in S401 is smaller than N. In this case, the base station 10 performs the CWS update operation using only the n HARQ FBs. The operation in the method 2-1b is similar to the operation in the method 1b accordingly.

When the user terminal 20 transmits a signal, the user terminal 20 may obtain the CWS on the basis of one or more HARQ FBs for the uplink signal or on the basis of the aggregated HARQ FB for the uplink signal using a similar method to that of the base station in the present disclosure, or may use, as the CWS, a value notified of from the base station 10 using RRC signaling, a MAC CE, or the like.

In other words, in the method 1a, the method 2a, the method 2-1a, the method 1b, the method 2b, and the method 2-1b, the base station 10 and the user terminal 20 may be replaced with the user terminal 20 and the base station 10, respectively, transmission from the base station 10 (the user terminal 20 after replacement) may be regarded as transmission of an uplink signal, and reception by the base station 10 (the user terminal 20 after replacement) may be regarded as reception of a downlink signal. In this case, the replaced user terminal 20 performs the operation of the base station 10 in the method 1a, the method 2a, the method 2-1a, the method 1b, the method 2b, and the method 2-1b, and the replaced base station 10 performs the operation of the user terminal 20 in the method 1a, the method 2a, the method 2-1a, the method 1b, the method 2b, and the method 2-1b. Also, as described above, when the user terminal 20 transmits a signal, the value notified of from the base station 10 using RRC signaling, a MAC CE, or the like may be used as the CWS.

### (Configuration of device)

Next, a configuration example of each of the base station 10 and the user terminal 20 in the present disclosure will be described.

### <Base station>

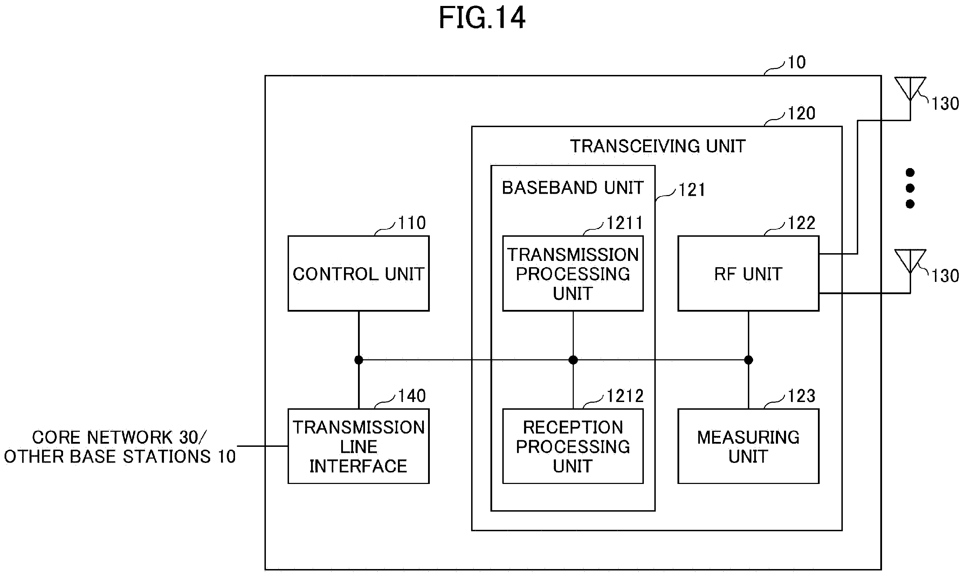

Fig. 14 is a diagram illustrating an example of a configuration of the base station 10 according to an embodiment. The base station 10 includes a control unit 110, a transceiving unit 120, a transceiving antenna 130, and a transmission line interface (transmission line interface) 140. It should be noted that one or more unit may be provided as each of the control unit 110, the transceiving unit 120, the transceiving antenna 130, and the transmission line interface 140.

Further, in the present example, the function blocks of the characteristic portions in the present embodiment are mainly illustrated, and the base station 10 may be assumed to include other function blocks necessary for wireless communication. Some of processes of the respective units to be described below may be omitted.

The control unit 110 controls the base station 10 in general. The control unit 110 can be configured with a controller, a control circuit, or the like which is described on the basis of common recognition in the technical field according to the present disclosure.

The control unit 110 may control signal generation, scheduling (for example, resource allocation, and mapping), and the like. The control unit 110 may control transmission/reception, measurement, and the like using the transceiving unit 120, the transceiving antenna 130, and the transmission line interface 140. The control unit 110 may generate data, control information, a sequence, or the like to be transmitted as a signal, and transfer the generated data to the transceiving unit 120. The control unit 110 may perform call processing (setting, release, and the like) of a communication channel, state management of the base station 10, management of radio resources, and the like.

The transceiving unit 120 may include a baseband unit 121, a radio frequency (RF) unit 122, and a measuring unit 123. The baseband unit 121 may include a transmission processing unit 1211 and a reception processing unit 1212. The transceiving unit 120 can be configured with a transmitter/receiver, a RF circuit, a baseband circuit, a filter, a phase shifter, a measuring circuit, a transmission/reception circuit, and the like which are described on the basis of the common recognition in the technical field according to the present disclosure.

The transceiving unit 120 may be configured as a single transceiving unit or may be configured with a transmitting unit and a receiving unit. The transmitting unit may include the transmission processing unit 1211 and the RF unit 122. The receiving unit may include the reception processing unit 1212, the RF unit 122, and the measuring unit 123.

The transceiving antenna 130 can be configured with an antenna, for example, an array antenna or the like which is described on the basis of common recognition in the technical field according to the present disclosure.

The transceiving unit 120 may transmit the downlink channel, the synchronization signal, the downlink reference signal, or the like. The transceiving unit 120 may receive the uplink channel, the uplink reference signal, or the like.

The transceiving unit 120 may form at least one of a transmission beam and a reception beam using digital beam forming (for example, provisioning), analog beam forming (for example, phase rotation), or the like.

For example, the transceiving unit 120 (the transmission processing unit 1211) may perform processing of a packet data convergence protocol (PDCP) layer, processing of a radio link control (RLC) layer (for example, RLC retransmission control), processing of a medium access control (MAC) layer (for example, HARQ retransmission control), and the like on data, control information, or the like obtained from the control unit 110 and generate a bit sequence to be transmitted.

The transceiving unit 120 (the transmission processing unit 1211) may perform channel coding (which may include error correction coding), modulation, mapping, filter processing, and discrete Fourier transform (DFT) processing (if necessary), inverse fast Fourier transform (IFFT) processing, precoding, transmission processing such as digital-to-analog conversion, and the like on a bit sequence to be transmitted and output a baseband signal.

The transceiving unit 120 (the RF unit 122) may perform modulation to a radio frequency range, filter processing, amplification, and the like on the baseband signal and transmit a signal of the radio frequency range through the transceiving antenna 130.

On the other hand, the transceiving unit 120 (the RF unit 122) may perform amplification, filter processing, demodulation to a baseband signal, and the like on the signal of the radio frequency range received by the transceiving antenna 130.

The transceiving unit 120 (the reception processing unit 1212) may apply analog-digital conversion, fast Fourier transform (FFT) processing, inverse discrete Fourier transform (IDFT) processing (if necessary), filter processing, mapping, demodulation, decoding (which may include error correction decoding), and reception processing such as MAC layer processing, RLC layer processing, and PDCP layer processing on the acquired baseband signal and acquire user data or the like.

The transceiving unit 120 (the measuring unit 123) may perform measurement related to a received signal. For example, the measuring unit 123 may perform radio resource management (RRM) measurement, channel state information (CSI) measurement, or the like on the basis of the received signal. The measuring unit 123 may measure reception power (for example, reference signal received power (RSRP)), reception quality (for example, reference signal received quality (RSRQ), signal to interference plus noise ratio (SINR), or signal to noise ratio (SNR)), signal strength (for example, received signal strength indicator (RSSI)), propagation path information (for example, CSI), or the like. The measurement result may be output to the control unit 110.

The transmission line interface 140 may perform transmission and reception (backhaul signaling) of signals with devices included in the core network 30 and the other base stations 10, and the like and, for example, acquire and transmit user data for the user terminal 20 (user plane data), control plane data, or the like. The transmitting unit and the receiving unit of the base station 10 in the present disclosure may be constituted with at least one of the transceiving unit 120 and the transceiving antenna 130.

For example, the transmitting unit of the base station 10 repeats a process of decreasing a randomly determined counter value within the contention window size on the basis of the channel sensing, and transmits the signal through the above channel after the counter value becomes 0, and the receiving unit receives the HARQ feedbacks corresponding to a plurality of slots from the terminal that has received the signal. The control unit determines the contention window size on the basis of the HARQ feedbacks corresponding to a plurality of slots. The receiving unit may reduce the randomly determined counter value within the contention window size on the basis of the channel sensing.

The control unit may shorten or maintain the contention window size in a case in which all of the HARQ feedback to be received corresponding to a plurality of slots are ACKs and extend or maintain the contention window size in the other cases.

The control unit may shorten or maintain the contention window size in a case in which all of the HARQ feedback to be received corresponding to most recently transmitted N (N is an integer of 0 or more) signals among the HARQ feedbacks corresponding to a plurality of slots are ACKs and extend or maintain the contention window size in the other cases.

The control unit may shorten or maintain the contention window size in a case in which the proportion of the number of received ACKs to the number of HARQ feedbacks to be received corresponding to a plurality of slots is a threshold value or more and extend or maintain the contention window size in the other cases.

The control unit may shorten or maintain the contention window size in a case in which the proportion of the number of received ACKs to the number of HARQ feedbacks to be received corresponding to corresponding to most recently transmitted N (N is an integer of 0 or more) signals among the HARQ feedbacks corresponding to a plurality of slots is a threshold value or more and extend or maintain the contention window size in the other cases.

### <User terminal>

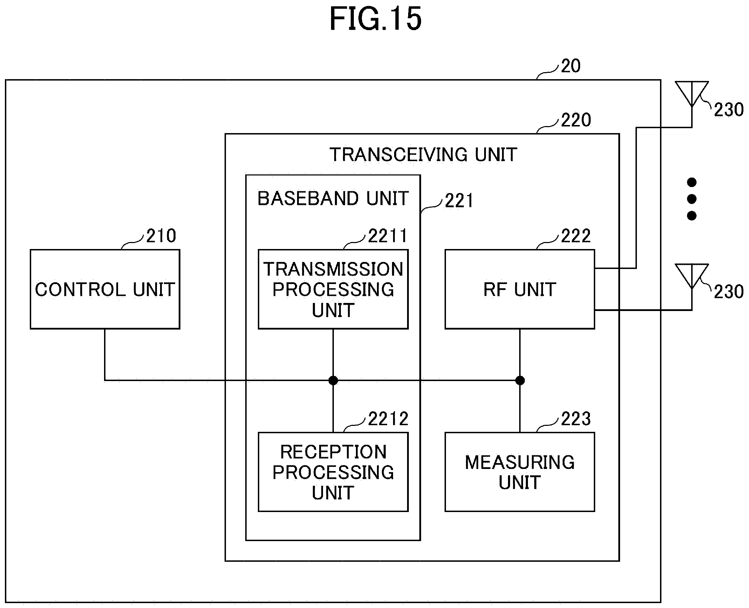

Fig. 15 is a diagram illustrating an example of a configuration of the user terminal 20 according to an embodiment. The user terminal 20 includes a control unit 210, a transceiving unit 220, and a transceiving antenna 230. It should be noted that one or more unit may be provided as each of the control unit 210, the transceiving unit 220, and the transceiving antenna 230.

Further, in the present example, the function blocks of the characteristic portions in the present embodiment are mainly illustrated, and the user terminal 20 may be assumed to include other function blocks necessary for wireless communication. Some of processes of the respective units to be described below may be omitted.

The control unit 210 controls the user terminal 20 in general. The control unit 210 can be configured with a controller, a control circuit, or the like which is described on the basis of common recognition in the technical field according to the present disclosure.

The control unit 210 may control signal generation, mapping, and the like. The control unit 210 may control transmission/reception, measurement, and the like using the transceiving unit 220 and the transceiving antenna 230. The control unit 210 may generate data, control information, a sequence, or the like to be transmitted as a signal, and transfer the generated data to the transceiving unit 220.

The transceiving unit 220 may include a baseband unit 221, an RF unit 222, and a measuring unit 223. The baseband unit 221 may include a transmission processing unit 2211 and a reception processing unit 2212. The transceiving unit 220 can be configured with a transmitter/receiver, a RF circuit, a baseband circuit, a filter, a phase shifter, a measuring circuit, a transmission/reception circuit, and the like which are described on the basis of the common recognition in the technical field according to the present disclosure.

The transceiving unit 220 may be configured as a single transceiving unit or may be configured with a transmitting unit and a receiving unit. The transmitting unit may include the transmission processing unit 2211 and the RF unit 222. The receiving unit may include the reception processing unit 2212, the RF unit 222, and the measuring unit 223.

The transceiving antenna 230 can be configured with an antenna, for example, an array antenna or the like which is described on the basis of common recognition in the technical field according to the present disclosure.

The transceiving unit 220 may transmit the downlink channel, the synchronization signal, the downlink reference signal, or the like. The transceiving unit 220 may receive the uplink channel, the uplink reference signal, or the like.

The transceiving unit 220 may form at least one of a transmission beam and a reception beam using digital beam forming (for example, provisioning), analog beam forming (for example, phase rotation), or the like.

For example, the transceiving unit 220 (the transmission processing unit 2211) may perform processing of a PDCP layer, processing of a RLC layer (for example, RLC retransmission control), processing of a MAC layer (for example, HARQ retransmission control), and the like on data, control information, or the like obtained from the control unit 210 and generate a bit sequence to be transmitted.

The transceiving unit 220 (the transmission processing unit 2211) may perform channel coding (which may include error correction coding), modulation, mapping, filter processing, and DFT processing (if necessary), IFFT processing, precoding, transmission processing such as digital-to-analog conversion, and the like on a bit sequence to be transmitted and output a baseband signal.

It may be determined whether or not the DFT processing is applied on the basis of a setting of transform precoding. In a case in which the transform precoding is enabled for a certain channel (for example, a PUSCH), the transceiving unit 220 (the transmission processing unit 2211) may perform the DFT processing as the transmission processing in order to transmit the channel using a DFT-s-OFDM waveform, and otherwise, the transceiving unit 220 (the transmission processing unit 2211) may not perform the DFT processing as the transmission processing.

The transceiving unit 220 (the RF unit 222) may perform modulation to a radio frequency range, filter processing, amplification, and the like on the baseband signal and transmit a signal of the radio frequency range through the transceiving antenna 230.

On the other hand, the transceiving unit 220 (the RF unit 222) may perform amplification, filter processing, demodulation to a baseband signal, and the like on the signal of the radio frequency range received by the transceiving antenna 230.

The transceiving unit 220 (the reception processing unit 2212) may apply analog-digital conversion, FFT processing, IDFT processing (if necessary), filter processing, mapping, demodulation, decoding (which may include error correction decoding), and reception processing such as MAC layer processing, RLC layer processing, and PDCP layer processing on the acquired baseband signal and acquire user data or the like.

The transceiving unit 220 (the measuring unit 223) may perform measurement related to a received signal. For example, measuring unit 223 may perform RRM measurement, CSI measurement, or the like on the basis of the received signal. The measuring unit 223 may measure reception power (for example, RSRP), reception quality (for example, RSRQ, SINR, or SNR), signal strength (for example, RSSI), propagation path information (for example, CSI), or the like. The measurement result may be output to the control unit 210.

The transmitting unit and the receiving unit of the user terminal 20 in the present disclosure may be configured with at least one of the transceiving unit 220, the transceiving antenna 230, and the transmission line interface 240.

Also, the transmitting unit of the user terminal 20 repeats a process of decreasing a randomly determined counter value within the contention window size on the basis of the channel sensing, and transmits the signal through the above channel after the counter value becomes 0, and the receiving unit receives the HARQ feedbacks corresponding to a plurality of slots from the base station that has received the signal. The control unit determines the contention window size on the basis of the HARQ feedbacks corresponding to a plurality of slots. The receiving unit may reduce the randomly determined counter value within the contention window size on the basis of the channel sensing.

The control unit may shorten or maintain the contention window size in a case in which all of the HARQ feedback to be received corresponding to a plurality of slots are ACKs and extend or maintain the contention window size in the other cases.

The control unit may shorten or maintain the contention window size in a case in which all of the HARQ feedback to be received corresponding to most recently transmitted N (N is an integer of 0 or more) signals among the HARQ feedbacks corresponding to a plurality of slots are ACKs and extend or maintain the contention window size in the other cases.

The control unit may shorten or maintain the contention window size in a case in which the proportion of the number of received ACKs to the number of HARQ feedbacks to be received corresponding to a plurality of slots is a threshold value or more and extend or maintain the contention window size in the other cases.

The control unit may shorten or maintain the contention window size in a case in which the proportion of the number of received ACKs to the number of HARQ feedbacks to be received corresponding to corresponding to most recently transmitted N (N is an integer of 0 or more) signals among the HARQ feedbacks corresponding to a plurality of slots is a threshold value or more and extend or maintain the contention window size in the other cases.

The receiving unit of the user terminal 20 receives a value of the contention window size from the base station through, for example, the RRC signaling or the MAC CE. For example, the transmitting unit repeats the process of decreasing the randomly determined counter value within the contention window size on the basis of the channel sensing and transmits a signal through the channel after the counter value becomes 0.

### (Hardware configuration)

In the block diagrams used for the description of the embodiment, the blocks of the functional units are illustrated. The functional blocks (configuring units) are implemented by an arbitrary combination of hardware and/or software. A device of implementing each functional block is not particularly limited. In other words, each functional block may be implemented by one device which is physically or logically combined or may be implemented by a plurality of devices, that is, two or more devices which are physically and/or logically separated and are directly or indirectly connected (for example, a wired and/or wireless manner). The function block may be implemented by combining software with the one device or the plurality of devices.

The functions include determining, deciding, judging, computing, calculating, processing, deriving, investigating, searching, confirming, receiving, transmitting, outputting, accessing, resolving, selecting, choosing, establishing, comparing, assuming, expectation, regarding, broadcasting, notifying, communicating, forwarding, configuring, reconfiguring, allocating, mapping, assigning, and the like but are not limited thereto. For example, a functional block (configuring unit) that causes transmission to function is referred to as a transmitting unit, a transmitter, or the like. In any case, as described above, an implementation method is not particularly limited.

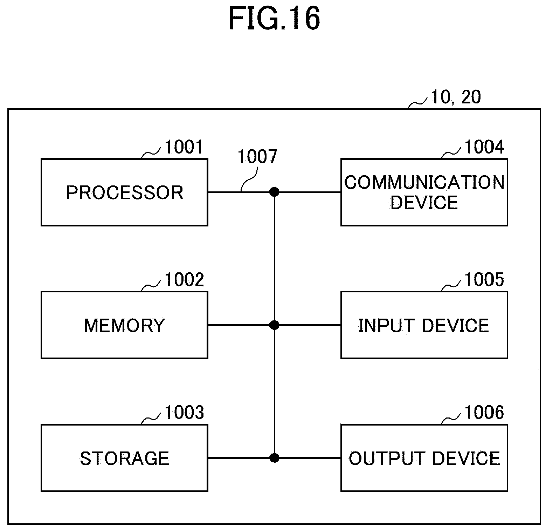

For example, the base station, the user terminal, or the like in one embodiment of the present disclosure may function as a computer that processes the wireless communication method of the present disclosure. Fig. 16 is a diagram illustrating an example of a hardware configuration of each of the base station and the user terminal according to one embodiment. Each of the base station 10 and the user terminal 20 may be physically configured as a computer device including a processor 1001, a memory 1002, a storage 1003, a communication device 1004, an input device 1005, an output device 1006, a bus 1007, and the like.

In the present disclosure, the terms "device," "circuit," "device," "section," "unit," and the like can be interpreted interchangeably. The hardware configuration of each of the base station 10 and the user terminal 20 may be configured to include one or more of the devices illustrated in the drawings or may be configured not to include some devices.

For example, although only one processor 1001 is illustrated, a plurality of processors may be provided. Further, the process may be executed by one processor, or the process may be executed by two or more processors simultaneously, sequentially, or by using other techniques. Further, the processor 1001 may be implemented by one or more chips.

For example, the respective functions of the base station 10 and the user terminal 20 are implemented such that predetermined software (program) is read onto hardware such as the processor 1001 and the memory 1002, and the processor 1001 performs an arithmetic operation and controls communication via the communication device 1004 or controls at least one of reading/writing of data in/from the memory 1002 and the storage 1003.

The processor 1001 controls, for example, the entire computer by operating the operating system. The processor 1001 may be configured with a central processing unit including an interface with peripheral devices, a control device, an arithmetic operation device, a register, and the like. For example, at least one of the control unit 110 (210), the transceiving unit 120 (220), and the like may be implemented by the processor 1001.

Further, the processor 1001 reads a program (a program mode), a software module, data, or the like from at least one of the storage 1003 and the communication device 1004 out to the memory 1002 and executes various kinds of processes in accordance with them. A program that causes a computer to execute at least some of the operations described in the above-described embodiment is used as the program. For example, the control unit 110 (210) may be implemented by a control program which is stored in the memory 1002 and operates on the processor 1001, and the other function blocks may be similarly implemented.

The memory 1002 is a computer-readable recording medium, and may be configured with, for example, at least one of a read only memory (ROM), an erasable programmable ROM (EPROM), an electrically EPROM (EEPROM), a random access memory (RAM), and other appropriate storage media. The memory 1002 is also called a register, a memory, a main memory (a main storage device), or the like. The memory 1002 can store a program (a program mode), a software module, and the like that can be executed to implement the wireless communication method according to an embodiment of the present disclosure.

The storage 1003 is a computer-readable recording medium and may be configured with at least one of, for example, a flexible disk, a floppy (registered trademark) disk, a magneto-optical disk (for example, a compact disk (compact disc ROM (CD-ROM), or the like), a digital versatile disk, or a Blu-ray (registered trademark) disk), a removable disk, a hard disk drive, a smart card, a flash storage device (for example, a card, a stick, or a key drive), a magnetic stripe, a database, a server, or other appropriate storage media. The storage 1003 is also called an auxiliary storage device.

The communication device 1004 is hardware (a transceiving device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplex (FDD) and time division duplex (TDD). For example, the transceiving unit 120 (220), the transceiving antenna 130 (230), or the like may be implemented by the communication device 1004. The transceiving unit 120 (220) may be implemented by to be physically or logically separated by the transmitting unit 120a (220a), the receiving unit 120b (220b), and the like.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

The respective devices such as the processor 1001 and the memory 1002 are connected via the bus 1007 to communicate information with each other. The bus 1007 may be configured with a single bus or may be configured with different buses between the devices.

Further, each of the base station 10 and the user terminal 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Effects of embodiment)

With the technology described in the embodiment, a technique of enabling the base station to appropriately determine the contention window size in a case in which the HARQ feedbacks corresponding to a plurality of slots are collectively transmitted from the user terminal is provided.

In further detail, according to the method 1a, the CWS can be updated on the basis of as much efficiently collectable FB information as possible. Accordingly, the contention of the signal can be detected with high accuracy, and an appropriate CWS can be selected.

According to the method 2a, the CWS can be updated on the basis of as much efficiently collectable FB information as possible. Accordingly, the contention of the signal can be detected with high accuracy, and an appropriate CWS can be selected. Further, a more stable operation can be realized by making an amount of information used for each execution uniform.

According to the method 1b, in addition to the features of the method 1a, the CWS can be updated by excluding the ACK-undetected state for some reason other than signal contention. Further, according to the method 2b, in addition to the features of the method 2a, the CWS can be updated by excluding the ACK-undetected state for some reason other than signal contention.

### (Modifications)

The terms described in the present disclosure and terms necessary for understanding the present disclosure may be replaced with terms having the same or similar meanings. For example, a channel, a symbol, and a signal (or signaling) may be interpreted interchangeably with each other. Also, the signal may be a message. The reference signal can also be abbreviated as RS and is also called a pilot, a pilot signal, or the like according to an applied standard. Also, the component carrier (CC) is also called a cell, a frequency carrier, a carrier frequency, or the like.

A radio frame may include one or more periods (frames) in the time domain. Each of one or more periods (frames) is also referred to as a sub frame. The sub frame may further include one or more slots in the time domain. The sub frame may have a fixed time length (for example, 1 ms) not depending on numerology.

The numerology may be a communication parameter applied to at least one of transmission and reception of a certain signal or channel. For example, the numerology may indicate at least one of a sub carrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (PUSCH) mapping type A. A PDSCH (or PUSCH) transmitted using a mini slot may be referred to as a PDSCH (or PUSCH) mapping type B.

All of a radio frame, a sub frame, a slot, a mini slot, and a symbol indicates a time unit for transmitting a signal. As a radio frame, a sub frame, a slot, a mini slot, and a symbol, different designations respectively corresponding to them may be used. In the present disclosure, time units such as a frame, a sub frame, a slot, a mini slot, and a symbol may be interpreted interchangeably.

For example, one sub frame may be referred to as a transmission time interval (TTI), or a plurality of consecutive sub frames may be referred to as TTIs, or one slot or one mini slot may be referred to as a TTI. In other words, at least one of the sub frame and the TTI may be a sub frame (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the sub frame.

Here, for example, the TTI refers to a minimum time unit of scheduling in wireless communication. For example, in the LTE system, the base station performs scheduling of allocating a radio resource (a frequency bandwidth, a transmission power, or the like which can be used in each user terminal) to each user terminal in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is given, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) constituting the minimum time unit of scheduling may be controlled.

A TTI having a time length of 1 ms may be referred to as a common TTI (TTI in 3GPP Rel. 8 to 12), a normal TTI, a long TTI, a common sub frame, a normal sub frame, a long sub frame, a slot, or the like. A TTI shorter than the common TTI may be referred to as a reduced TTI, a short TTI, a partial TTI (a partial or fractional TTI), a reduced sub frame, a short sub frame, a mini slot, a sub slot, a slot, or the like.

Further, a long TTI (for example, a common TTI, a sub frame, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in the time domain and the frequency domain and may include one or more consecutive subcarriers in the frequency domain. The number of sub carriers included in an RB may be the same irrespective of a numerology and may be, for example, 12. The number of sub carriers included in an RB may be decided on the basis of a numerology.

Further, an RB may include one or more symbols and may be a length of one slot, one mini slot, one sub frame, or one TTI in the time domain. Each of one TTI, one sub frame, or the like may be constituted by one or more resource blocks.

Further, one or more RBs may be referred to as a physical resource block (PRB), a sub carrier group (SCG), a resource element group (REG), a PRB pair, an RB pair, or the like.

Further, the resource block may be constituted by one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a UL BWP (BWP for UL) and a DL BWP (BWP for DL). In a UE, one or more BWPs may be configured within one carrier.

At least one of configured BWPs may be active, and it may not be assumed that the UE transmits and receives a predetermined signal/channel outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of sub frames included in a radio frame, the number of slots per sub frame or radio frame, the number of mini slots included in a slot, the number of symbols and RBs included in a slot or a mini slot, the number of sub carriers included in an RB, the number of symbols in a TTI, a symbol length, a cyclic prefix (CP) length, and the like can be variously changed.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

Also, information, signals, or the like can be output either from the higher layer to the lower layer or from the lower layer to the higher layer. Information, signals, or the like may be input/output via a plurality of network nodes.

Input and output information, signals, and the like may be stored in a specific place (for example, a memory) or may be managed through a management table. Input and output information, signals, and the like may be overwritten, updated, or additionally written. Output information, signals, and the like may be deleted. Input information, signals, and the like may be transmitted to another device.

A notification of information is not limited to the aspect or embodiment described in the present disclosure and may be given by any other method. For example, a notification of information in the present disclosure may be given by physical layer signaling (for example, downlink control information (DCI), uplink control information (UCI)), higher layer signaling (for example, radio resource control (RRC) signaling, broadcast information (master information block (MIB)), system information block (SIB), or the like), medium access control (MAC) signaling), other signals, or a combination thereof.

The physical layer signaling is also called Layer 1/Layer 2 (L1/L2) control information (L1/L2 control signal), L1 control information (L1control signal), or the like. Further, the RRC signaling may be referred to as an RRC message and may be, for example, an RRC connection setup message, an RRC connection reconfiguration message, or the like. Also, the MAC signaling may be notified of using, for example, a MAC control element (MAC).

Further, notification of predetermined information (for example, notification of "being X") is not limited to being performed explicitly but may be performed implicitly (for example, by giving no notification of predetermined information or notification of other information).

The determination the present disclosure may be performed in accordance with a value (0 or 1) indicated by one bit, may be performed in accordance with a Boolean value indicated by true or false, or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using at least one of a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

The terms "system" and "network" used in the present disclosure are used interchangeably. A term "network" may mean a device (for example, a base station) included in the network.

In the present disclosure, terms "precoding," "precoder," "weight (precoding weight)," "Quasi-Co-Location (QCL)," "transmission configuration indication state (TCI state)," "Space" "Spatial relation," "spatial domain filter," "transmission power," "phase rotation," "antenna port," "antenna port group," "layer," "the number of layers," "rank," "resource," "resources kit," "resources group," "beam," "beam width," "beam angle," "antenna," "antenna element," and "panel" can be interchangeably.

In the present disclosure, the terms "base station (BS)," "radio base station," "fixed station," "Node B," "eNode B (eNB)." "gNodeB (gNB)," "access point," "transmission point," "reception point," "transmission/reception point," "panel," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, It may also be referred to as a remote terminal, handset, user agent, mobile client, client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of user terminal (for example, which may be referred to as device-to-device (D2D) or vehicle-to-everything (V2X)). In this case, the user terminal 20 may have the functions of the base station 10 described above. Further, the terms "uplink" and "downlink" may be replaced with terms (for example, "side") corresponding to inter-terminal communication. For example, an uplink channel, a downlink channel, or the like may be read with side channels.

Similarly, the user terminal in the present disclosure may be interpreted interchangeably with the base station. In this case, the base station may have the functions of the above-mentioned user terminal.

In this specification, an operation that is supposed to be performed by the base station device may be performed by an upper node in some cases. In a network including one or more network nodes including a base station, various operations performed for communication with a terminal can be obviously performed by one or more network nodes (for example, a mobility management entity (MME), a serving-gateway (S-GW), or the like is considered, but it is not limited thereto) other than the base station device or a combination thereof.

The respective aspects/embodiments described in the present disclosure may be used alone, may be used in combination, or may be switched according to an execution. Further, the processing procedures, the sequences, the flowcharts, or the like of the respective aspects/embodiments described in the present disclosure may be reversed in order unless there is a contradiction. For example, the method described in the present disclosure presents elements of various steps using an exemplary order and is not limited to a presented specific order.

Each aspect and embodiment of the present invention may be applied to at least one of Long Term Evolution (LTE), LTE-advanced (LTE-A), LTE-Beyond (LTE-B), SUPER 3G, IMT-advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE802.20, Ultra-WideBand (UWB), Bluetooth (registered trademark), a system using any other appropriate communication methods, a next generation system extended on the basis of these standards, or the like. Further, a plurality of systems may be combined (for example, a combination of LTE or LTE-A and 5G) and applied.

A phrase "on the basis of" used in the present disclosure is not limited to "on the basis of only" unless otherwise stated. In other words, a phrase "on the basis of" means both "on the basis of only" and "on the basis of at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

The term "determining (deciding)" used in this specification may include a wide variety of actions. For example, "determining (deciding)" and "deciding" may include, for example, events in which events such as judging, calculating, computing, processing, deriving, investigating, looking up, search, and inquiry (for example, looking up in a table, a database, or another data structure), or ascertaining are regarded as "determining" or "deciding."

Further, "determining (deciding)" may include, for example, events in which events such as receiving (for example, receiving information), transmitting (for example, transmitting information), input, output, or accessing (for example, accessing data in a memory) are regarded as "determining (deciding)."

Further, "determining (deciding)" may be regarded as "determining (deciding) resolving, selecting, choosing, establishing, comparing, or the like. In other words, "determining (deciding)" may be regarded as "determining (deciding) a certain operation.

Further, "determining (deciding)" may be interpreted interchangeably with "assuming," "expecting," "considering," or the like.

A "maximum transmission power" described in the present disclosure may mean a maximum value of transmission power, may mean nominal UE maximum transmission power, or may mean rated maximum transmission power.

Terms "connected" and "coupled" used in the present disclosure or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access."

In the present disclosure, in a case in which two elements are connected, they can be considered to be "connected" or "coupled" with each other using one or more electric wires, cables, a printed electrical connection, or the like or using electromagnetic energy having a wavelength in a radio frequency domain, a microwave region, or an light (both visible and invisible) region as nonlimiting and non-exhaustive examples.

In the present disclosure, a term "A and B are different" may mean "A and B are different from each other." Further, the term may mean "each of A and B is different from C." Terms such as "separated," "coupled," or the like may also be interpreted in similarly to "different."

In a case in which "include," "including," and variations thereof are used in the present disclosure, these terms are intended to be comprehensive, similarly to a term "comprising." Further, the term "or" used in the present disclosure is intended not to be an exclusive disjunction.

In the entire present disclosure, for example, when an article such as "a," "an," or "the" in English is added by a translation, the present disclosure may include a case in which a noun following the article is the plural.

Although the invention according to the present disclosure has been described above in detail, it is obvious to those skilled in the art that the invention according to the present disclosure is not limited to the embodiment described in the present disclosure. The invention according to the present disclosure may be implemented as revised and modified forms without departing from the gist and scope of the invention as configured forth in claims. Therefore, the description of the present disclosure is for the purpose of illustration and does not have any restrictive meaning to the present disclosure.

### EXPLANATIONS OF LETTERS OR NUMERALS

- 10: BASE STATION

- 20: USER TERMINAL
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A base station, comprising:
a transmitting unit that repeats a process of decreasing a randomly determined counter value within a contention window size on the basis of channel sensing and transmits a signal after the counter value becomes 0;
a receiving unit that receives HARQ feedbacks corresponding to a plurality of slots from a terminal that has received the signal; and
a control unit that decides the contention window size on the basis of the HARQ feedbacks corresponding to the plurality of slots.

2. The base station according to claim 1, wherein the control unit shortens or maintains the contention window size in a case in which all the HARQ feedbacks to be received corresponding to the plurality of slots are ACKs, and extends or maintains the contention window size in the other cases.

3. The base station according to claim 1, wherein the control unit shortens or maintains the contention window size in at least one case of
a case in which all HARQ feedbacks to be received corresponding to most recently transmitted N signals (N is an integer of 0 or more) among the HARQ feedbacks corresponding to the plurality of slots are ACKs, and
a case in which a ratio of the number of received ACKs to all HARQ feedbacks to be received corresponding to most recently transmitted N signals (N is an integer of 0 or more) among the HARQ feedbacks corresponding to the plurality of slots is a threshold value or more, and
extends or maintains the contention window size in the other cases.

4. The base station according to claim 1, wherein the control unit shortens or maintains the contention window size in a case in which a ratio of the number of received ACKs to the number of HARQ feedbacks to be received corresponding to the plurality of slots is a threshold value or more and extends or maintains the contention window size in the other cases.

5. A terminal, comprising:
a transmitting unit that repeats a process of decreasing a randomly determined counter value within a contention window size on the basis of channel sensing and transmits a signal after the counter value becomes 0;
a receiving unit that receives HARQ feedbacks corresponding to a plurality of slots from a base station that has received the signal; and
a control unit that decides the contention window size on the basis of the HARQ feedbacks corresponding to the plurality of slots.

6. A contention window size decision method executed by a base station, comprising:
a step of repeating a process of decreasing a randomly determined counter value within a contention window size on the basis of channel sensing and transmitting a signal after the counter value becomes 0;
a step of receiving HARQ feedbacks corresponding to a plurality of slots from a terminal that has received the signal; and
a step of deciding the contention window size on the basis of the HARQ feedbacks corresponding to the plurality of slots.
